# EUROPEAN PATENT APPLICATION

(11) **EP 2 065 089 A2**
(43) Date of publication of application: **03.06.2009**
(21) Application number: 08020146.0
(22) Date of filing: 18.11.2008
(51) Int. Cl.: B02C 4/28, G01F 23/26, G01F 25/00

(54) **Apparatus and method for controlling roller mills**

(30) Priority: 29.11.2007 IT mi20072248
(71) Applicant: OCRIM S.p.A., 26100 Cremona (CR) (IT)
(72) Inventor: Bonelli, Alberto Calisto, 26022 Castelverde (Cremona) (IT); Triachini, Giansante Odino, Torre De' Picenardi (Cremona ) 26038 (IT)
(74) Representative: Forattini, Amelia

(57) **Abstract**

A control apparatus, particularly for roller mills in plants for milling food products, including a probe device which is inserted in a container of a product to be fed to a pair of milling rollers by feed rollers. The device includes a reference probe (2), which is always immersed in the product and measures a reference capacitance value, and a level probe (20), which measures a variation of the capacitance of the product related to the variation of the level of the product. The reference capacitance value and the capacitance variation are used by a control means to actuate the rollers. The probe device is pre-calibrated in factory so as to be able to adapt automatically to the variations of the characteristics of the product to be fed to the rollers.

## Description

The present invention relates to an apparatus and a method for controlling roller mills.

Mills for processing cereals to obtain finished products, such as flour, meal and bran, are industrial plants with a high degree of automation, in which various operations are performed for product processing, conditioning, cleaning, milling, screening, by various machines controlled according to clearly defined process patterns or diagrams.

One of the crucial phases of the process is milling, i.e., the gradual reduction of the particle size distribution of the initial cereal, which is performed in roller mills.

Those machines, which are therefore among the most important ones present in a mill, are installed in quantities which can vary typically from 4-5 to 10-20 units, as a function of the total capacity of the system and of the type of cereal processed.

In each individual half-machine, usually known as "passage", a partial particle size reduction of the cereal is achieved, obtaining a particular type of intermediate product.

The finished products of the plant are the end result of this sequence of intermediate millings. The intermediate products that must be obtained to have the desired finished product at the end of the process are different in terms of shape, dimensions (particle size distribution), specific gravity and other physical characteristics.

The individual milling passages, i.e., the individual half-mills, are thus equipped and run differently with respect to each other: in other words, the surfaces of the milling rollers and their speeds are different according to the intermediate product to be obtained.

Also the flow of product in the milling section is not uniform: the flow-rates in terms of mass processed by each individual passage differ for example for each type of intermediate product provided by the milling diagram.

The flow-rate with which each individual milling passage is fed is adjusted by the feed rollers and the speed of the rollers is determined as a function of the provided flow-rate.

The flow of the various products in the milling section, however, is characterized by variations and oscillations, which are due both to the granular nature of the products and to the type of motion imparted to them by the operating modes of the other machines of the plant section (alternating rectilinear motion or flat rotary motion or rotary motion about a vertical or horizontal axis), and by gravity feeding at the individual milling passages. Since for the purpose of correct milling, both from a qualitative standpoint and from a quantitative standpoint, each individual passage must instead be fed by a flow-rate which is as constant and uniform as possible, it is necessary to vary the speed of the feed rollers as a function of the amount of product that arrives at each individual machine.

In view of the high degree of automation of the plants being considered, the different operating modes for each individual half-machine (passage) and the large number of machines to be adjusted, it is desirable for the variation of the speed of the feed rollers as a function of the incoming flow-rate to be as much as possible automatic, precise, reliable and without the need for frequent adjustments or settings by mill operators.

Prior art systems of this type, which are indeed used in the most widespread types of mill, are described in patents IT-1298188 (Ocrim), WO98/58738 (Buhler) and WO93/06928 (Satake).

IT-1298188 and WO93/06928 disclose systems for adjusting the speed of feed rollers based on measuring the variations of the level of product in the buffer tank, also known as "bell", which is present at the input of each mill.

WO98/58738 discloses a system which is based on measuring a force which is proportional to the weight of the incoming product: the action produced by the signals that originate from all these measurements is always the variation of the speed of the feed rollers.

IT-1298188 discloses a system in which the quantity variations of the incoming product are detected by a capacitive probe, i.e., a probe which operates on the basis of the variation of the capacitance of a capacitor provided within the bell, the dielectric of which is constituted by air and product and is modified by the level variations of the latter. The dielectric constant of the product affects the measurement and the variations of this dielectric constant, which in turn is influenced by temperature and humidity, entail unwanted variations in the measurement.

US-4383444 discloses a double-probe system, in which one probe, almost always immersed completely in the product, renders the measurement independent of the dielectric constant of the product. US-4383444 also provides for a reference capacitor, in the circuit of the electronic system, which is used to compensate for thermal drifts of the circuit or for damping read errors caused by temperature. The same patent also discloses the practical embodiment of a probe which allows to combine in a single object the two probes, the level measuring probe and the reference probe, which is always immersed in the product.

The embodiment of the probe described in US-4383444, however, has an inevitable capacitive coupling between the central pole of the cable and, through the measurement probe connected to it, to the variable capacitor constituted by the measured product. Therefore, the value of the reference capacitor detected with the constantly immersed probe varies according to the level of the product, thwarting the advantages that would be obtainable with the two-probe system.

The prior art systems described above perform fairly well but in any case do not allow to overcome some drawbacks which typically occur in the plants being considered.

For example, the main difficulty that the testing engineer of milling systems encounters during first starts, is the initial calibration of the adjustment system, whichever it may be.

The different physical characteristics of the intermediate products of the milling process in fact, force a specific initial setting for each milling passage, i.e., for each half-machine. In high-capacity systems, the testing engineer therefore has to individually set even 40 or more different adjustment systems. Also, the setting of each passage directly affects the setting of the other passages that are connected to it in the process diagram, with the consequent frequent need to perform iterative trial-and-error settings until an acceptable steady-state operating condition is reached, i.e., until the "balanced mill" condition, considered indispensable by mill operators, is reached.

It is important to remember that in milling plants, in order to prevent dangerous situations, level sensors are usually inserted in the intake pipes at some passages and stop the entire mill if clogging is detected. An incorrect calibration of the systems for adjusting the supply of any milling passage can cause halting of the plant, which is obviously undesirable even during testing.

The testing engineer must perform all the calibration operations during the starting step, i.e., while the tests are being performed to achieve the flow-rates and yields provided by the design, when the other sections of the mill also are not in steady-state conditions: the advantages that would arise from facilitating the first setting operations or even from eliminating them are therefore evident.

Also, once the steps for testing the system have been passed, the prior art systems cited above for adjusting the supply of mills, do not allow to cope in a fully reliable manner with some drawbacks that typically occur during steady-state operation, i.e., during normal production steps.

The most typical situation is linked to the dependence of the flow characteristics of the various intermediate products of the milling process on some specific physical values, such as the temperature and humidity of the environment and the temperature and humidity of the product itself. The way in which the product is propelled by the feed rollers onto the milling rollers is in fact influenced by the friction coefficient of the product, which in turn is linked to the temperature and humidity values mentioned earlier.

The optimum speed of the feed rollers can therefore vary as the temperature and humidity vary.

Taking into account the fact that the cereal is usually conditioned so as to obtain a different initial humidity depending on the environmental conditions, typically summer or winter, there is a frequent need to perform calibration of the adjustment system again as a function of the different environmental conditions.

In mills, it is not infrequent to find operating modes which provide for chosen variations of the humidity of the product to be sent to milling. To facilitate unloading from silos, the product that lies closest to the bottom of the silo is in fact often conditioned with a lower humidity than the rest. Therefore, the milling section is fed, during a same working cycle, with product having different humidities, thus making the calibration step even more critical.

Changing the milling diagram provided initially due to changes in production requirements on the part of the plant manager, caused for example by market conditions which require processing raw materials or obtaining finished products which are different from the ones planned initially, also entail varying the condition of optimum adjustment of the feed rollers and can require further calibrations.

Because of the presence of the clogging sensors in the plant, as mentioned earlier, incorrect calibrations can cause stops, with obvious economic damage. Since the setting operations are performed manually, it is also not possible to exclude problems that arise from human errors.

The aim of the present invention is to provide a system which overcomes the drawbacks of the cited prior art.

Within the scope of this aim, an object of the invention is to provide a method and an apparatus that offer evident advantages both during first starting of the system (testing) and during its steady-state operation.

Another object of the invention is to provide an adjustment system which does not require any initial calibration, neither for first setting during testing nor for re-calibration for subsequent variations of the physical characteristics of the products.

Another object is to provide a method and an apparatus capable of making the measurement of the level of the product, i.e., the input to adjust the speed of the feed rollers, independent of the variation of the physical characteristics of the product and of the environmental conditions.

Another object of the present invention is to provide an apparatus which, by virtue of its particular constructive characteristics, is capable of giving the greatest assurances of reliability and safety in use.

This aim and these and other objects, which will become better apparent hereinafter, are achieved by a control apparatus, particularly for roller mills in plants for milling food products, comprising a probe device which is inserted in a container of a product to be fed to a pair of milling rollers by means of feed rollers, characterized in that said probe device comprises a reference probe, which is always immersed in the product and is adapted to measure a reference capacitance value, and a level probe, which is adapted to measure a variation of the capacitance of the product related to the variation of the level of said product; said reference capacitance value and said capacitance variation being used by a control means to actuate said rollers, said probe device being pre-calibrated in factory so as to be able to adapt automatically to the variations of the characteristics of the product to be fed to said rollers.

This aim and these objects are also achieved by a method for controlling roller mills in plants for milling food products, comprising the steps of:
measuring a reference capacitance value by means of a reference probe which is always immersed in a product contained in a container and to be fed to a set of feed and milling rollers;
measuring a variation of the capacitance of the product related to the level variation of said product by means of a level probe;
providing said reference capacitance value and said capacitance variation to a control means for controlling said rollers;
said method being characterized in that said reference and level probes are factory calibrated before installation in the mill, so that they can adapt automatically to the variations of the characteristics of the product to be fed to said rollers.

Further characteristics and advantages will become better apparent from the description of preferred but not exclusive embodiments of the invention, illustrated by way of non-limiting example in the accompanying drawings, wherein:

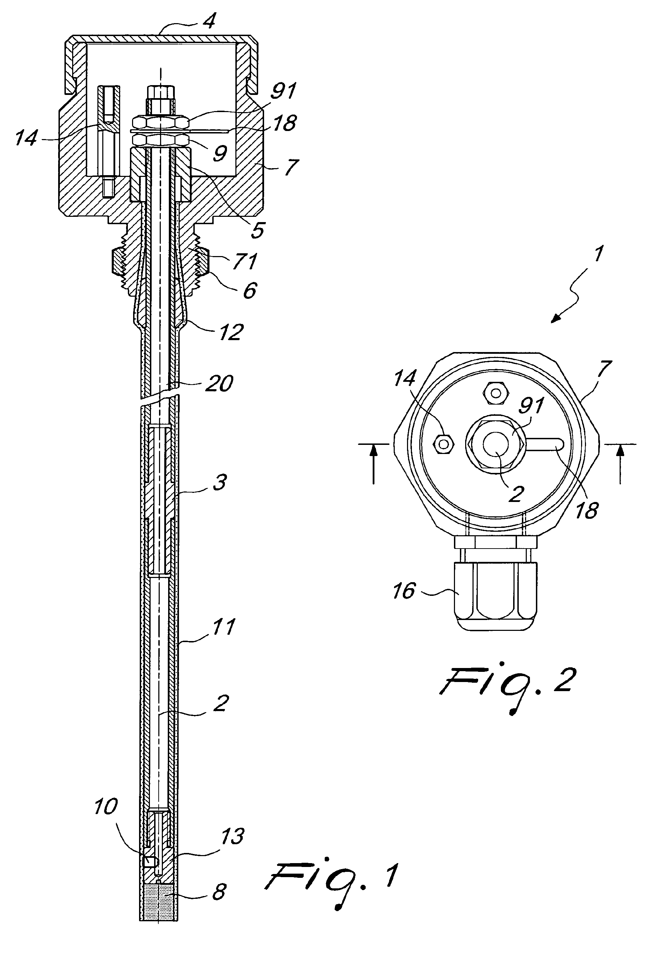

Figure 1 is a longitudinal sectional side view of a self-calibrating probe according to the present invention;
Figure 2 is a plan view of the self-calibrating probe of the preceding figure;
Figure 3 is a block diagram of the operation of the apparatus according to the present invention.

With reference to the cited figures, the apparatus according to the invention comprises a probe device, generally designated by the reference numeral 1, which is constituted by a first level probe 20 and by a second reference probe 2, which are fitted within a supporting tube 11 with the interposition of an intermediate spacer 3.

The supporting tube 11 is associated with a casing 7 by means of a conical member 12, which is interposed between the tube 11 and the first probe 20 at a collar 71 of the casing 7.

The collar 71 is threaded in order to engage a lock nut 6, which locks the tube 11, and therefore the probe assembly, on the bell of the mill.

The first probe 20 lies inside the casing 7, where it is locked by a first nut 9 with the interposition of an insulating washer 5.

A second nut 91 locks a connector 18 on the first nut 9. A second connector 14, provided with a spacer, is fixed within the casing 7. The casing 7 is also provided with a lid 4.

A plug 13 of the reference probe 2 is provided at the free end of the reference probe 2, inside the tube 11.

The reference probe plug 13 has a radial grub screw 10 and the tube 11 is closed by means of a Teflon plug 8.

The conducting wires, not visible in the drawings, exit from the casing 7 by means of a grommet 16.

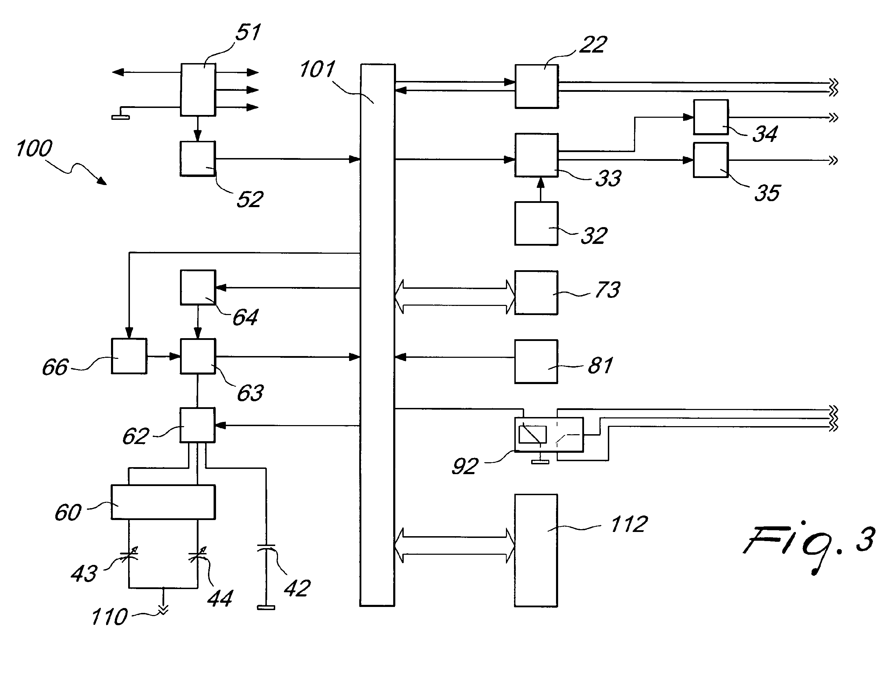

Figure 3 is a block diagram of the control means of the apparatus, which is connected to the probe device 1 and is adapted to control the operation of the milling rollers.

The control system, generally designated by the reference numeral 100, comprises a microcontroller 101 which is fed by a power supply 51 controlled by a supervisor 52.

The first level probe 43 and the second reference probe 44 are connected to a ground 110 and to a high-speed switch 62 provided with ESD protection 60.

The switch 62 is connected to a reference capacitor 42 and to an oscillator 63, which in turn is connected to a time base 64 and to a scale factor 66.

The microcontroller 101 controls a DAC 33, which is associated with a reference component 32, and in turn controls two types of analog output: respectively a 4-20 mA output, designated by the reference numeral 34, and a 0-10 V output, designated by the reference numeral 35.

A minimum level indicator relay 92, a mode selector 81, a nonvolatile memory NV 73, an RS485 interface, designated by the reference numeral 22, and a man-machine interface 112 are associated with the microcontroller 101.

The operation of the apparatus according to the invention is as follows.

The device 1 constitutes a single cylindrical probe, which is positioned vertically within the bell of each passage. The bell is not shown in the figures.

The apparatus is constituted by two plates which are arranged coaxially: a shorter one, located in the lower part, constitutes the first plate of the reference probe, designated by the reference numeral 2; the other plate, which is as long as the bell is high, constitutes the first level measurement plate, designated by the reference numeral 20, while the second plate, which is common to both, is constituted by the bell and by the metallic structure of the machine itself.

Two distinct systems for measuring the respective capacitances are thus provided in a single constructive member.

Particular care in the construction of the probe device has been dedicated to the use of components with extremely low dissipation.

In practice it has been found that the probe device installed in a plant allows, after a first calibration to be performed on every type of intermediate milling product, an adjustment of the speed of the feed rollers which is acceptable even following variations of the characteristics of the product.

The specific characteristics of the milling passage for which the operations for first calibration were most critical and difficult were thus identified.

Once this passage was identified, it was then possible to use this setting as a factory setting. Accordingly, by resorting to self-compensation, i.e., to the possibility of the probe to adapt to the characteristics of the product by means of the reference probe, each probe device can correct its internal parameters, adapting to the different characteristics of the products in the various passages on the plant.

Experimental tests and careful analysis of their results have allowed to determine a criterion for selecting the parameters on which the factory calibration of the system is to be performed.

These parameters are the variation of the electrical capacitance of the product, its bulk density and the tangent of the rest angle, which are linked in the following manner. (Dielectric capacitance variation) * (bulk density) / (tangent of the rest angle)

This value is the basis on which the single passage on which first calibration is to be performed is chosen, which is to be then repeated identically on all the other passages of the generic milling section.

In general, in grain mills, the intermediate product which has the smallest value defined above is the one identified as "B4G" in the jargon of the field, as also observed in the tests.

A first factory calibration is therefore performed on the basis of the characteristics of a standard "B4G", conveniently worsened with safety factors which are capable of covering all the variabilities of this product from one plant to another.

This selection criterion therefore allows, once the physical characteristics of the products to be obtained on a given plant are known, to perform a single factory calibration which is identical for all the adjustment devices being considered, since self-compensation will allow rapidly the adaptation of the individual probes to the specific passage.

This criterion for selecting the calibration parameters allows to overcome all the drawbacks described in the introduction.

In practice it has been observed that the invention achieves the intended aim and objects, providing a method and an apparatus for controlling roller mills in plants for milling food products, which provides an adjustment system which requires no initial calibration, neither for first setting during testing, nor for re-calibration for subsequent variations of the physical characteristics of the products.

The method and the apparatus according to the invention are expressly aimed at the specific field of measurements aimed at adjusting multiple cereal mills which are mutually interconnected by product flow and are managed by a single automation system and solve all the drawbacks mentioned in the introduction; however, this method and this apparatus can be used advantageously also in other fields in which there are similar calibration and adjustment problems.

This application claims the priority of Italian Patent Application No. MI2007A002248, filed on November 29, 2007, the subject matter of which is incorporated herein by reference.

## Claims

1. A control apparatus, particularly for roller mills in plants for milling food products, comprising a probe device which is inserted in a container of a product to be fed to a pair of milling rollers by means of feed rollers, **characterized in that** said probe device comprises a reference probe, which is always immersed in the product and is adapted to measure a reference capacitance value, and a level probe, which is adapted to measure a variation of the capacitance of the product related to the variation of the level of said product; said reference capacitance value and said capacitance variation being used by a control means to actuate said rollers, said probe device being pre-calibrated in factory so as to be able to adapt automatically to the variations of the characteristics of the product to be fed to said rollers.

2. The apparatus according to claim 1, **characterized in that** said factory calibration is performed on the basis of the characteristics of the product that is more difficult to control in terms of automatic adjustment of the speed of said feed rollers.

3. The apparatus according to claim 2, **characterized in that** said product that is most difficult to control is defined by the minimum value of the parameter: (variation of dielectric constant between empty and full) * (bulk density)/(rest angle tangent).

4. The apparatus according to one or more of the preceding claims, **characterized in that** said factory calibration is performed on the basis of the characteristics of a "B4G" product, conveniently worsened with safety coefficients which are capable of covering all the variabilities of said product from one plant to another.

5. The apparatus according to one or more of the preceding claims, **characterized in that** said probe device is constituted by a first level probe and a second reference probe, which are mounted within a supporting tube with the interposition of an intermediate spacer.

6. The apparatus according to one or more of the preceding claims, **characterized in that** said supporting tube is associated with a casing by means of a conical member which is interposed between said tube and said first probe at a collar of said casing; said collar is threaded in order to engage a lock nut which locks said tube and therefore the probe assembly within said casing; said first probe lies within said casing, where it is locked by a first nut with the interposition of an insulating washer; a second nut locks a connector onto said first nut; a second connector, provided with a spacer, is fastened within said casing; said casing is provided with a lid; at the free end of said reference probe, within said tube, there is a reference probe plug; said reference probe plug has a radial grub screw and said tube is closed by means of a Teflon plug.

7. A mill for milling cereals comprising, for each milling passage, a probe device which is inserted within a container of a product to be fed to a pair of milling rollers by means of feed rollers, **characterized in that** said probe device comprises a reference probe, which is always immersed in the product, and is adapted to measure a reference capacitance value, and a level probe, which is adapted to measure a variation of the capacitance of the product in relation to the variation in level of said product; said reference capacitance value and said capacitance variation being used by a control means to control said rollers, said probe device being pre-calibrated at the factory so that it can adapt automatically to the variations of the characteristics of the product to be fed to said rollers.

8. A method for controlling roller mills in plants for milling food products, comprising the steps of:
measuring a reference capacitance value by means of a reference probe which is always immersed in a product contained in a container and to be fed to a set of feeding and milling rollers;
measuring a variation of the capacitance of the product related to the level variation of said product by means of a level probe;
providing said reference capacitance value and said capacitance variation to a control means for controlling said rollers;
said method being **characterized in that** said reference and level probes are factory calibrated before installation in the mill, so that they can adapt automatically to the variations of the characteristics of the product to be fed to said rollers.

9. The method according to claim 8, **characterized in that** said factory calibration step is performed on the basis of the characteristics of the product that is most difficult to control in terms of automatic adjustment of the speed of said feed rollers.

10. The method according to claim 9, **characterized in that** said product that is most difficult to control is defined by the minimum value of the parameter: (Dielectric constant variation between empty and full) * (bulk density) / (rest angle tangent).

11. The method according to claim 9, **characterized in that** said factory calibration is performed on the basis of the characteristics of a "B4G" product, suitably worsened with safety coefficients which are capable of covering all the variabilities of said product from one plant to another.
